# EUROPEAN PATENT APPLICATION

(11) **EP 4 822 232 A1**
(43) Date of publication of application: **14.10.2026**
(21) Application number: 26167377.6
(22) Date of filing: 24.03.2026
(51) Int. Cl.: F16L 27/02, F16L 27/04, F16L 39/04

(54) **PIPE ASSEMBLY**

(30) Priority: 11.04.2025 GB 202505458
(71) Applicant: Airbus Operations Ltd, Filton, Bristol BS34 7PA (GB)
(72) Inventor: PHILLIPS, Samuel, Bristol, BS34 7PA (GB)
(74) Representative: Worthington, Richard Easton

(57) **Abstract**

A pipe assembly (100) comprising: a first rigid pipe section (110) having a first longitudinal axis (A1); a second rigid pipe section (120) having a second longitudinal axis (A2); and a flexible pipe section (130) attached to the first and second rigid pipe sections and configured to allow relative movement between the first rigid pipe section and the second rigid pipe section. The pipe assembly comprises a first sliding support (140) comprising a first joint section (142) fixed with respect to the first rigid pipe section and a second joint section (144) fixed with respect to the second rigid pipe section. The first joint section is configured to be in sliding contact with the second joint section during relative movement between the first rigid pipe section and the second rigid pipe section so as to limit axial misalignment between the first and second longitudinal axes. The pipe assembly comprises a second sliding support (150) comprising a third joint section (152) fixed with respect to the first rigid pipe section and a fourth joint section (154) fixed with respect to the second rigid pipe section. The third joint section is spaced apart from the fourth joint section in a first state. The third joint section is in sliding contact with the fourth joint section and maintains said sliding contact during relative movement between the first rigid pipe section and the second rigid pipe section so as to limit axial misalignment between the first and second longitudinal axes in a second state in which the first sliding support has failed.

## Description

### FIELD OF THE INVENTION

The present invention relates to a pipe assembly and an aircraft.

### BACKGROUND OF THE INVENTION

There are a number of alternative fuels that are being considered to help meet future emissions targets, with one such approach being the use of hydrogen fuel. The cryogenic temperatures required for hydrogen fuels mean that the pipes are at a much lower temperature compared to the surrounding atmosphere, and this can result in significant contraction of the pipes.

The pipe assemblies therefore often comprise series of rigid pipe sections connected via flexible pipe sections to facilitate relative movement as a result of the expansion or contraction, along with movement as a result of external loads applied to the pipe assembly. There is a need to design failsafe systems to reduce the likelihood of these flexible pipe sections failing.

### SUMMARY OF THE INVENTION

A first aspect of the invention provides a pipe assembly comprising: a first rigid pipe section having a first longitudinal axis; a second rigid pipe section having a second longitudinal axis; a flexible pipe section attached to the first and second rigid pipe sections and configured to allow relative movement between the first rigid pipe section and the second rigid pipe section; a first sliding support comprising a first joint section fixed with respect to the first rigid pipe section and a second joint section fixed with respect to the second rigid pipe section, wherein the first joint section is configured to be in sliding contact with the second joint section during relative movement between the first rigid pipe section and the second rigid pipe section so as to limit axial misalignment between the first and second longitudinal axes; and a second sliding support comprising a third joint section fixed with respect to the first rigid pipe section and a fourth joint section fixed with respect to the second rigid pipe section, wherein the third joint section is spaced apart from the fourth joint section in a first state, and wherein the third joint section is in sliding contact with the fourth joint section and maintains said sliding contact during relative movement between the first rigid pipe section and the second rigid pipe section so as to limit axial misalignment between the first and second longitudinal axes in a second state in which the first sliding support has failed.

Optionally, the first sliding support is attached to outer surfaces of the first and second rigid pipe sections. Optionally, the second sliding support is attached to inner surfaces of the first and second rigid pipe sections.

Optionally, the first joint section overlaps the second joint section. Optionally, the third joint section overlaps the fourth joint section.

Optionally, the first sliding support is spaced apart from the flexible pipe section in the radial direction. Optionally, the second sliding support is spaced apart from the flexible pipe section in the radial direction.

Optionally, the flexible pipe section is configured to allow axial movement between the first and second rigid pipe sections.

Optionally, the third and fourth joint sections are spaced apart by less than 2 millimetres in the first state. Optionally, the axial misalignment between the first and second longitudinal axes in the second state is limited to less than 5 degrees.

Optionally, at least one of the first and section joint sections comprises a spherical surface for sliding contact with a surface of the other of the first and second joint sections. Optionally, at least one of the third and fourth joint sections comprises a spherical surface for sliding contact with a surface of the other of the third and fourth joint sections.

Optionally, the flexible pipe section includes a bellows.

Optionally, the first and second pipe sections form an outer pipe assembly, and the pipe assembly further comprises an inner pipe assembly enveloped by the outer pipe assembly.

Optionally, the inner pipe assembly comprises a third rigid pipe section, a fourth rigid pipe section and a further flexible pipe section between the third and fourth rigid pipe sections. Preferably, the further flexible pipe section includes a bellows.

Optionally, the pipe assembly is configured to convey hydrogen fuel.

Optionally, the inner pipe assembly is configured to convey hydrogen fuel.

Optionally, the hydrogen fuel is liquid hydrogen fuel.

Optionally, the hydrogen fuel is gaseous hydrogen.

Optionally, the inner pipe assembly is spaced from the outer pipe assembly.

Optionally, the space between the inner pipe assembly and the outer pipe assembly comprises a vacuum or an inert gas.

A further aspect of the invention provides an aircraft comprising the pipe assembly of any preceding claim.

### BRIEF DESCRIPTION OF THE DRAWINGS

Embodiments of the invention will now be described with reference to the accompanying drawings, in which:
Figure 1 shows an aircraft;
Figure 2 shows a sectional view of a wing box of the starboard wing;
Figure 3 shows the wing box extending along a wing;
Figure 4a shows a side view of a pipe assembly in a nominal position;
Figure 4b shows a side view of the pipe assembly of Figure 4a in a first offset position;
Figure 4c shows a side view of the pipe assembly of Figure 4a in a second offset position;
Figure 5 shows a cross sectional view of the pipe assembly of Figures 4a-c in a first state;
Figure 6 shows the pipe assembly of Figure 5 in a second state;
Figure 7a shows a cross sectional view of a further example of a pipe assembly in a nominal position;
Figure 7b shows the pipe assembly of Figure 7a in an offset position; and
Figure 8 shows a cross sectional view of another example of a pipe assembly.

### DETAILED DESCRIPTION OF EMBODIMENT(S)

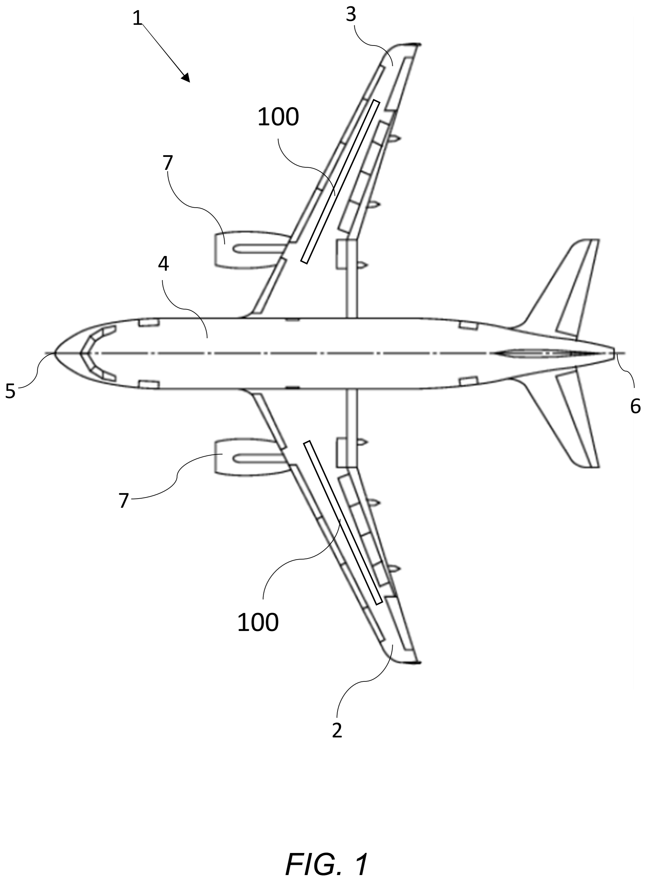

Figure 1 shows an aircraft 1 to provide context for the invention. The aircraft 1 has port and starboard fixed wings 2, 3, engines 7, a fuselage 4 with a nose end 5 and a tail end 6. The aircraft 1 is a typical jet passenger transonic transport aircraft although the invention is applicable to a wide variety of aircraft types, including commercial, military, passenger, cargo, jet, propeller, general aviation, etc. with any number of engines attached or integral to the wings or fuselage.

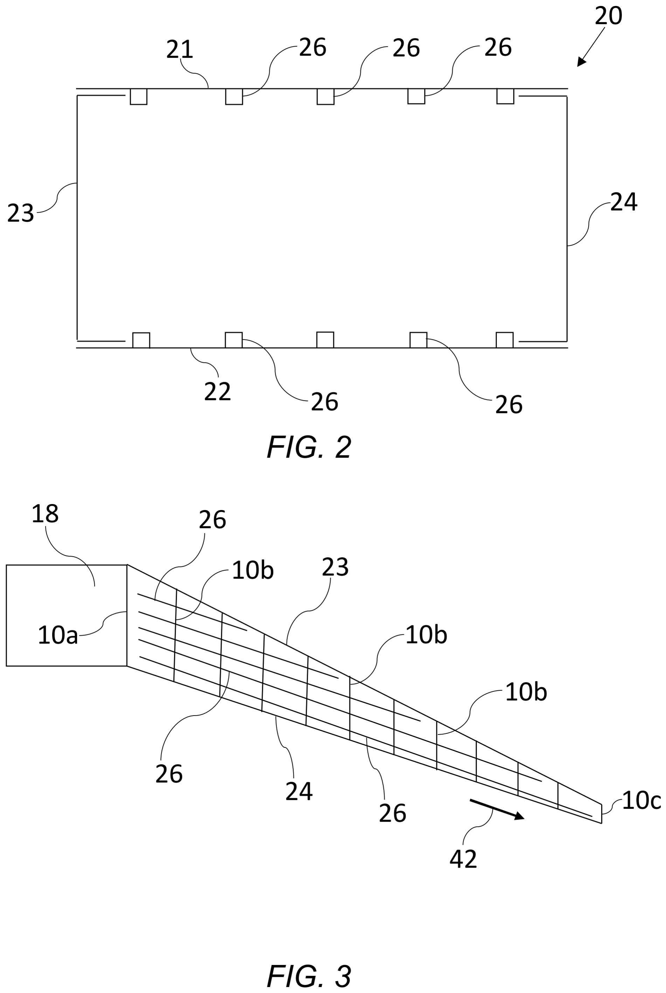

The main structural element of the wing 3 is a wing box 20 that may be formed by upper and lower covers 21, 22 and front and rear spars 23, 24 shown in cross-section in Figure 2. The covers 21, 22 and spars 23, 24 may each be formed of Carbon Fibre Reinforced Polymer (CFRP) laminate components. Each cover 21, 22 comprises a panel assembly and may have a curved aerodynamic outer surface (e.g. the upper surface of the upper cover 21 and the lower surface of the lower cover 22) over which air flows during flight of the aircraft 1. Each cover 21, 22 has an inner surface carrying a series of stiffeners 26 extending in the spanwise direction 42 (only some of the stiffeners 26 are labelled so as to improve the clarity of the figures). Each stiffener 26 is joined to one cover 21, 22 but not the other.

It will be understood that any number of stiffeners 26 may be applied across the chord of the wing 3, although only five are shown coupled to each cover 21, 22 in Figures 2 and 3 for the purposes of clarity.

The wing box 20 may have a plurality of transverse ribs, each rib being joined to the covers 21, 22 and the spars 25, 26. The ribs 10 may include an inner-most inboard rib 10a located at the root of the wing box 20, an outer-most rib 10c at the tip of the wing box 20, and one or more mid-span ribs 10b between the inner-most and outer-most ribs 10a, 10c. The inner-most rib 10a may be an attachment rib which forms the root of the wing box 20 and is joined to a centre wing box 18 within the body of the fuselage 4. Each rib 10a, 10b, 10c may connect the upper cover 21 to the lower cover 22. The stiffeners 26 may pass through rib recesses (not shown) in the ribs 10b.

There is provided a pipe assembly 100 within the wing box 20, shown schematically in Figure 1. The pipe assembly 100 may be configured to convey fuel about the aircraft 1, for example from a refuelling port to a fuel tank, or from a fuel tank to an engine 7. The pipe assembly 100 comprises multiple distinct pipe sections connected at joints along the pipe assembly 100. Each joint permits and limits relative movement between adjacent pipe sections, for example as the wing 2, 3 bends or flexes during flight. It will however be appreciated that the pipe assembly 100 may be used anywhere within the aircraft 1, such as for example within the fuselage 4.

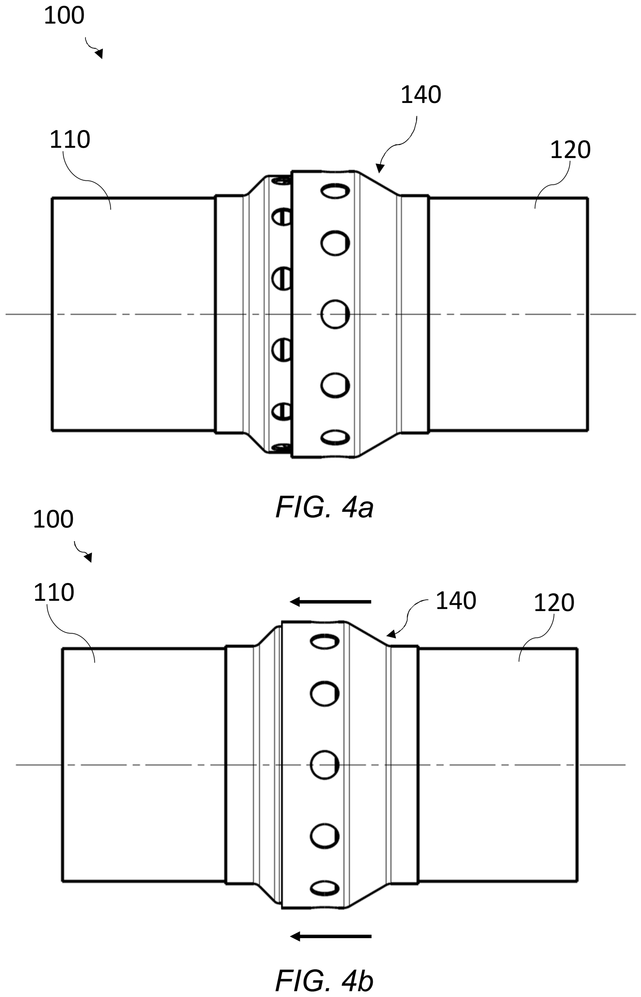

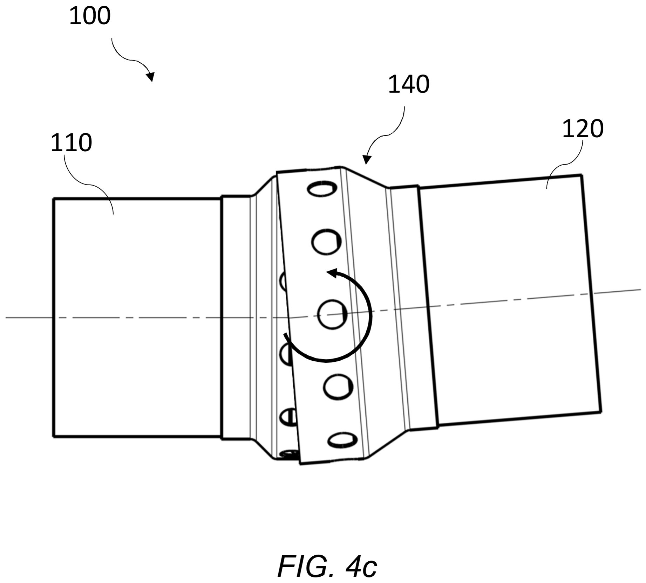

Figure 4a-c show side views of a portion of the pipe assembly 100 comprising a first rigid pipe section 110 and a second rigid pipe section 120 supported by a first sliding support 140. In Figure 4a the pipe assembly 100 is shown in a nominal position. In Figure 4b, the pipe assembly 100 is shown in a first offset position, where the second rigid pipe section 120 has moved towards the first rigid pipe section via translation as indicated by the arrows in Figure 4b. In Figure 4c, the pipe assembly 100 is shown in a second offset position, where the second rigid pipe section 120 is rotated relative to the first rigid pipe section 100 about an axis perpendicular to the longitudinal axis of the first rigid pipe section 110 as indicated by the arrow in Figure 4c. In a further offset position, the second rigid pipe section 120 may be rotated relative to the first rigid pipe section 100 about the longitudinal axis of the first 110 and/or the second 120 rigid pipe sections. In a still further offset position, the second rigid pipe section 120 may be offset from the nominal position by a combined translation and rotation movement relative to the first rigid pipe section 110.

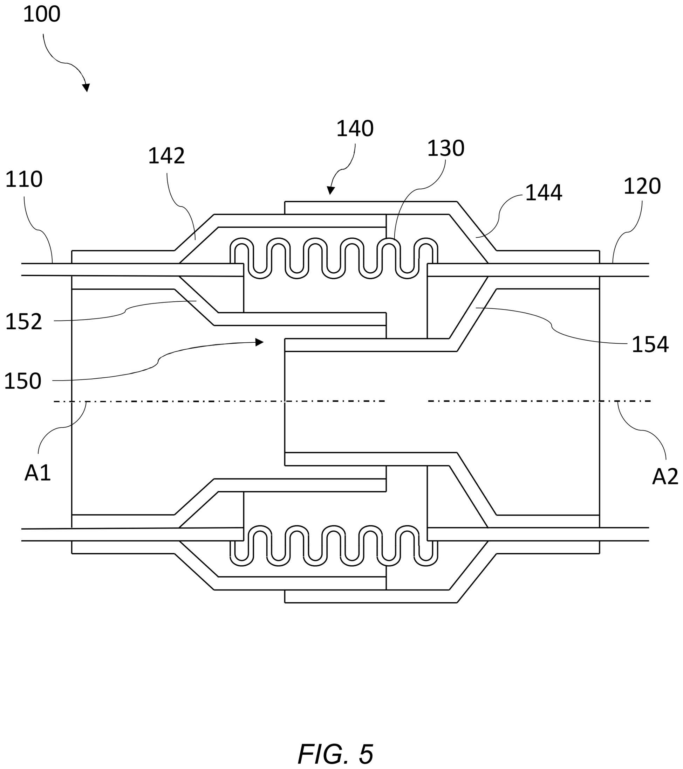

Figure 5 shows a cross-sectional view taken along a longitudinal axis of the pipe assembly 100. The pipe assembly 100 comprises a first rigid pipe section 110 having a first longitudinal axis A1 and a second rigid pipe section 120 having a second longitudinal axis A2. A rigid pipe section may here be defined as a non-flexible pipe section, such that the pipe section resists bending and/or changes in length when subjected to loads. The first 110 and second 120 rigid pipe sections may comprise or be formed of metal e.g. stainless steel. The first 110 and second 120 rigid pipe sections may have a constant wall thickness and diameter along their lengths, and each pipe section may have the same wall thickness or diameter as the other.

A flexible pipe section 130 extends between the first rigid pipe section 110 and the second rigid pipe section 120 as shown in Figure 5. The flexible pipe section 130 is attached to the first 110 and second 120 rigid pipe sections and is configured to allow relative movement of the two rigid pipe sections. The first 110 and second 120 rigid pipe sections may move relative to one another via translation and/or rotation. This movement may result in the first 110 and second 120 rigid pipe sections, in particular the first A1 and second A2 longitudinal axes, becoming misaligned. The flexible pipe section 130 may be resiliently attached to the first 110 and second 120 rigid pipe sections to limit or prevent a flow of fluid through the connections therebetween. The flexible pipe section 130 may be welded to the first 110 and/or second 120 rigid pipe sections. The flexible pipe section 130 may comprise a bellows pipe or other suitable arrangement for absorbing movements in the pipe assembly. The flexible pipe section 130 may be integrally formed with the first 110 and/or second rigid pipe sections. In other words, the pipe assembly 100 may be continuous across the joint and absent of any disassemblable couplings. The flexible pipe section 130 may be formed of metal, e.g. stainless steel. The flexible pipe section 130 may be a bellows arrangement comprising a series of undulations, such as shown in Figure 5. The bellows undulations may comprise a multi ply construction, for example stacked thin layers of material, e.g. numbering two, three or more layers. The bellows may comprise stainless steel, e.g. each ply layer may comprise stainless steel. The undulations may have a constant wall thickness. Alternatively, the flexible pipe section 130 may be a braided pipe arrangement.

The flexible pipe section 130 facilitates relative moment between the respective first 110 and second 120 rigid pipe sections. The movement may be axial and/or rotational. In this manner, load transfer between the pipe assembly 100 and the aircraft structure, such as for example a rib 10, to which the pipe assembly 100 is attached is reduced. For instance, if the pipe assembly 100 comprised a continuous rigid pipe section (not shown), the loads on the pipe assembly 100 caused by twisting and/or bending of the wing 3 could be transferred from the pipe assembly 100 to the rib 10 and thereby require additional strengthening of the rib 10. In the present arrangement, the load transfer is reduced or mitigated by the flexible pipe section 130 providing for relative movement between the first 110 and second 120 rigid pipe sections.

To help support the first rigid pipe section 110 relative to the second rigid pipe section 120, there is provided a first sliding support 140. The first sliding support 140 comprises a first joint section 142 fixed to the first rigid pipe section 110 and a second joint section 144 fixed to the second rigid pipe section 120. The first 142 and second 144 joint sections are in sliding contact, such that the first 142 and second 144 joint sections remain in contact and slide relative to one another during relative movement between the first 110 and second 120 rigid pipe sections. In this way, axial misalignment of the first 110 and second 120 rigid pipe sections is limited. As shown in Figure 4a, the first sliding support 140 may extend around the entirety of the first 110 and second 120 rigid pipe sections. In the example shown in Figure 4a, each of the first 142 and second 144 joint sections comprises apertures therethrough, which may reduce the weight of the first sliding support 140. The sliding arrangement between the first 142 and second 144 joint sections may be facilitated by at least a portion of the first joint section 142 overlapping at least a portion of the second joint section 144.

In the example shown in Figure 5, both the first 142 and second 144 joint sections are generally cylindrical. That is to say that the surface of each joint section that is in contact with the other joint section is curved in a single plane only. This arrangement may prevent misalignment of the first A1 and second A2 longitudinal axes, by preventing relative translation of the first 110 and second 120 rigid pipe sections in the plane perpendicular to each respective longitudinal axis, and by preventing relative rotation of the first 110 and second 120 rigid pipe sections about axes perpendicular to each respective longitudinal axis. The first sliding support 140 may allow relative movement of the first 110 and second 120 rigid pipe sections by translation along and rotation about the first A1 and second A2 aligned axes.

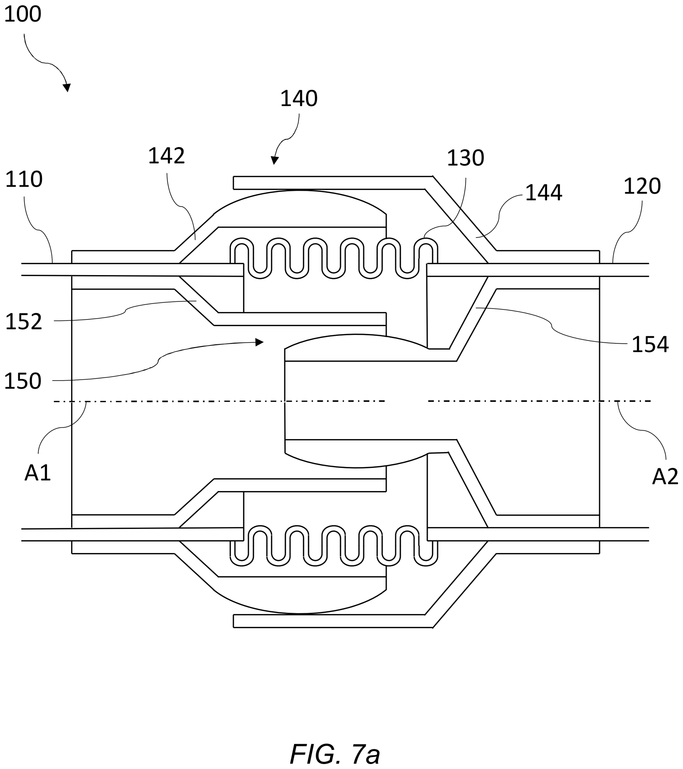

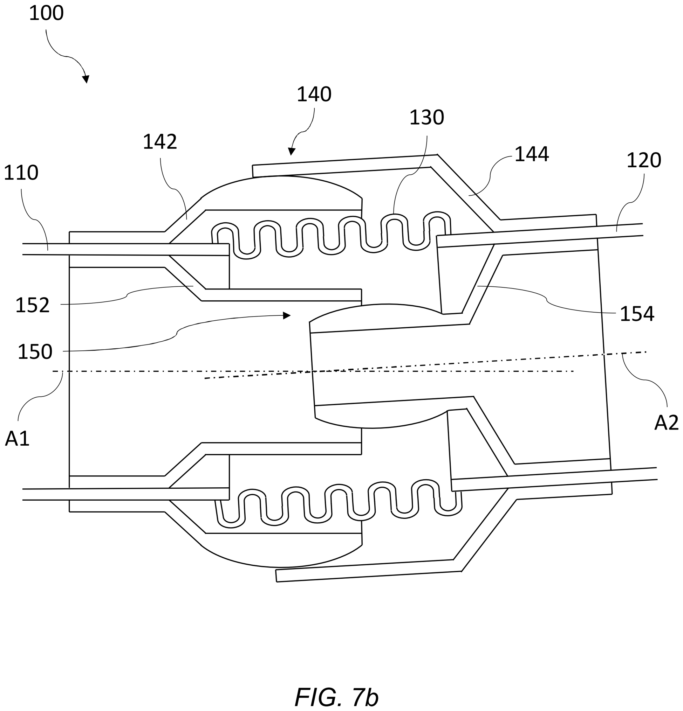

Alternatively, one of the joint sections may comprise a generally spherically curved surface, such that one of the sliding interface surfaces is curved in two orthogonal planes. Figures 7a and 7b show an example of a pipe assembly 100 comprising a first joint section 142 having a generally spherical outer surface in sliding contact with a generally cylindrical inner surface of the second joint section 144. The interface between the first 142 and second 144 joint sections may therefore comprise a cylindrical surface in sliding contact with a spherical surface. This may allow the first sliding support 140 to support both translational and rotational misalignment between the first 110 and second 120 rigid pipe sections, as illustrated in Figure 7b. Figure 7b shows a pipe assembly 100 in an offset position, where the second rigid pipe section 120 has been offset from the first rigid pipe section 110 via a translation and/or rotation displacement. In the offset position shown in Figure 7b, the flexible pipe section 130 is stretched and/or compressed. It will be appreciated that in alternative examples, the second joint section 144 may have a spherical inner surface and the first joint section 142 may have a cylindrical outer surface. Although described with reference to pipe sections having a generally circular outer perimeter, the first 110 and second pipe sections 120 and/or the first 142 and second 144 joint sections may take substantially any shape.

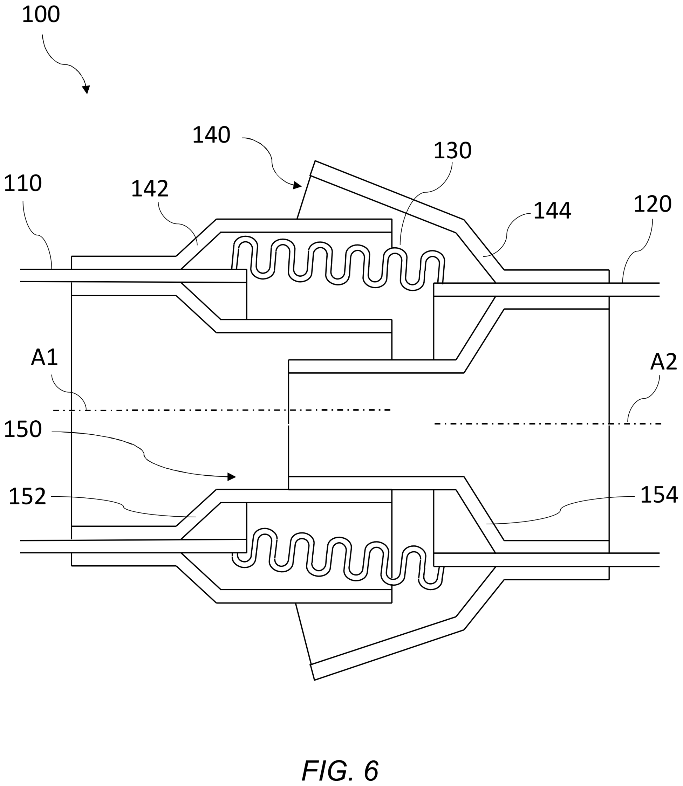

The pipe assembly 100 further comprises a second sliding support 150, which may be referred to as a waiting support or a failsafe support. The second sliding support 150 is generally similar to the first sliding support 140 and comprises a third joint section 152 fixed to the first rigid pipe section 110 and a fourth joint section 154 fixed to the second rigid pipe section 120. During normal operation of the pipe assembly 100 and/or the aircraft 1, the third 152 and fourth 154 joint sections are configured in a first state as shown in Figure 5, where the third joint section 152 is spaced apart from the fourth joint section 154. That is to say that, during normal operation, the third 152 and fourth 154 joint sections are not in contact. The second sliding support 150 is further configured to operate in a second state as shown in Figure 6, when the first sliding support 140 has failed and can no longer support the first rigid pipe section 110 relative to the second relative pipe section 120. Providing a failsafe support may reduce the likelihood of the pipe assembly 100, in particular the flexible pipe section 130 and its connection to the first 110 and second 120 rigid pipe sections, failing or rupturing should the first sliding support 140 fail.

In the second state shown in Figure 6, the first 110 and second 120 rigid pipe sections are axially misaligned such that at least a portion of the third 152 and fourth 154 joint sections are in sliding contact. In the second state, the second sliding support 150 may operate substantially identically to how the first sliding support 140 operates during normal operating conditions, as described previously. As such, the relative profiles of the third 152 and fourth 154 joint sections may be substantially identical to those described with reference to the first 142 and second 144 joint sections. For brevity, these details will not be discussed again in detail. In the example shown in Figures 7a,b, the second sliding support 150 comprises a fourth joint section 154 having a spherical outer surface arranged to be in sliding contact with a cylindrical inner surface of the third joint section 152 when the pipe assembly 100 is in the second state.

In the example shown, the third 152 and fourth 154 joint sections extend entirely about the first A1 and second A2 longitudinal axes respectively. The third 152 and fourth 154 joint sections may be substantially concentric. At least a portion of the third 152 and fourth 154 joint sections may overlap as shown in Figure 5. The third 152 and fourth 154 joint sections may be radially spaced apart with respect to the first A1 and/or second A2 longitudinal axes. As such, in the second state, the first rigid pipe section 110 may be misaligned with respect to the second rigid pipe section 120 by translation in a plane normal to the first A1 and/or second A2 longitudinal axes. Misalignment of the first 110 and second 120 rigid pipe sections may be limited by the third 152 and fourth 154 joint sections coming into contact (i.e. when the space between the third 152 and fourth 154 joint sections is removed). As such, the third 152 and fourth 154 joint sections may be spaced apart by a distance corresponding to the maximum allowable translational misalignment of the first 110 and second 120 rigid pipe sections. The third 152 and fourth 154 joint sections may be spaced apart by a distance of less than 10 millimetres, preferably by a distance of less than 5 millimetres, further preferably by a distance of less than 2 millimetres in the first state. In the second state, the second sliding support 150 may be configured to limit rotational misalignment of the first A1 and second A2 longitudinal axes to less than 10 degrees, preferably to less than 8 degrees, further preferably by less than 5 degrees.

In the examples shown, the first sliding support 140 is attached to outer surfaces of the first 110 and second 120 rigid pipe sections, and the second sliding support 150 is attached to inner surfaces of the first 110 and second 120 rigid pipe sections. This may be preferable such that the first sliding support 140 may be readily inspected, for example visually, to check whether the pipe assembly 100 is in its first or second state. That is to say that providing the first sliding support 140 on the outer surface of the rigid pipe sections may make it easier to check whether the first sliding support 140 has failed. In another example, both the first 140 and second 150 sliding supports may be arranged on the outer surface of the first 110 and second 120 rigid pipe sections. In this case, it may be preferable to position the first sliding support 140 radially outwards relative to the second sliding support 150, for the same reasons regarding inspection of the pipe assembly 100 and in particular the first sliding support 140.

More generally, the first sliding support 140 may be spaced apart from the flexible pipe section 130 in the radial direction. This may reduce the likelihood of the first 142 and/or second 144 joint sections sliding support 140 contacting and/or damaging the flexible pipe section 130 should the first sliding support 140 fail. The distance between the first sliding support 140 and the flexible pipe section 130 may be greater than the distance between the third 152 and fourth 154 joint sections, such that the third joint section 152 contacts the fourth joint section 154 before the first sliding support 140 contacts the flexible pipe section 130. Similarly, the second sliding support 150 may be spaced apart from the flexible pipe section 130 in the radial direction relative to the first A1 and second A2 axes.

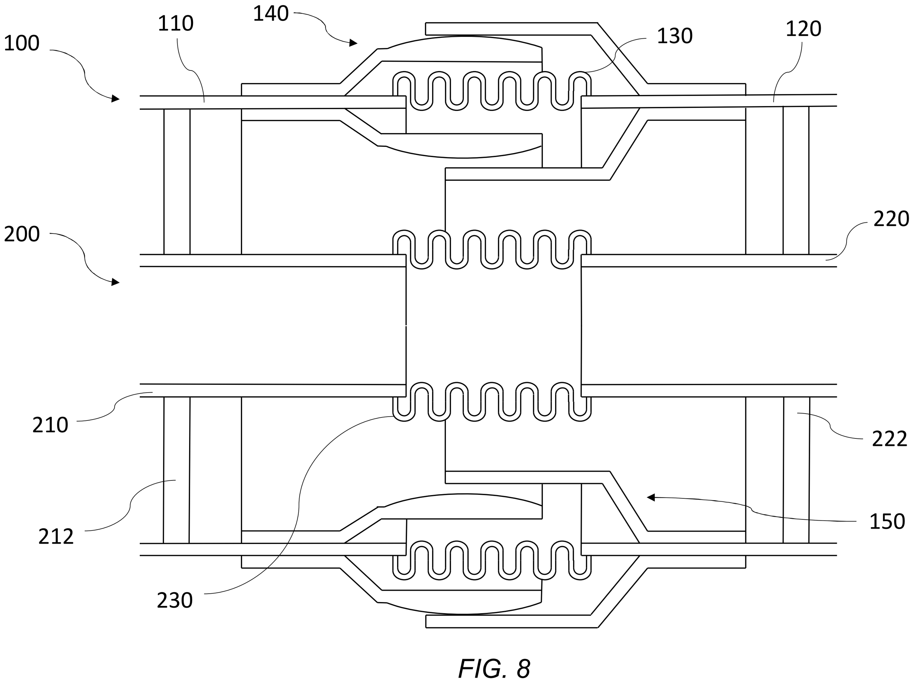

The pipe assembly 100 may comprise a double walled pipe assembly. As such, the first 110 and second 120 rigid pipe sections described previously may form an outer pipe assembly, with an inner pipe assembly 200 received within the outer pipe assembly as shown in Figure 8. Although shown as comprising a first 140 and second 150 sliding support both having a spherical sliding surface, it will be appreciated that either or both of the sliding supports may instead comprise cylindrical sliding surfaces only.

The pipe assembly 100 may substantially fully envelop the inner pipe assembly 200. The inner pipe assembly 200 may comprise a third rigid pipe section 210 and a fourth rigid pipe section 220 coupled by a further flexible pipe section 230, similar to the arrangement of the first 110 and second 120 rigid pipe sections with the flexible pipe section 130. The further flexible pipe section 230 may comprise a bellows as described previously with reference to the flexible pipe section 130. Alternatively, the second pipe assembly 200 may comprise a single continuous pipe extending along substantially the full length of the pipe assembly 100. The inner pipe assembly 200 may be held in position relative to the pipe assembly 100 using spacers 212, 222 or similar. The spacers may extend between the first 110 and third 210, and second 120 and fourth 220 rigid pipe sections respectively. The first 110 and third 210 rigid pipe sections may be coaxial. The second 120 and fourth 220 rigid pipe sections may be coaxial. As shown in Figure 8, it may be preferable to provide the second pipe assembly 200 spaced apart from the pipe assembly 100 such that the double walled pipe arrangement comprises two distinct channels.

The pipe assembly 100 may be configured to convey hydrogen fuel, in particular liquid hydrogen fuel. Where the pipe assembly 100 comprises a double walled pipe assembly as described with reference to Figure 8, the inner pipe assembly 200 may be configured to convey the hydrogen fuel. Liquid hydrogen must be kept at low temperature when it is conveyed about an aircraft 1. As such, it may be preferable to generate a vacuum in the space between the inner pipe assembly 200 and the pipe assembly 100. Alternatively, an inert gas may be provided in the space between the inner pipe assembly 200 and the pipe assembly 100. This may help to insulate the inner pipe assembly 200, which may reduce thermal transfer thereto.

Where the word 'or' appears this is to be construed to mean 'and/or' such that items referred to are not necessarily mutually exclusive and may be used in any appropriate combination.

Although the invention has been described above with reference to one or more preferred embodiments, it will be appreciated that various changes or modifications may be made without departing from the scope of the invention as defined in the appended claims.

## Claims

1. A pipe assembly comprising:
a first rigid pipe section having a first longitudinal axis;
a second rigid pipe section having a second longitudinal axis;
a flexible pipe section attached to the first and second rigid pipe sections and configured to allow relative movement between the first rigid pipe section and the second rigid pipe section;
a first sliding support comprising a first joint section fixed with respect to the first rigid pipe section and a second joint section fixed with respect to the second rigid pipe section, wherein the first joint section is configured to be in sliding contact with the second joint section during relative movement between the first rigid pipe section and the second rigid pipe section so as to limit axial misalignment between the first and second longitudinal axes; and
a second sliding support comprising a third joint section fixed with respect to the first rigid pipe section and a fourth joint section fixed with respect to the second rigid pipe section, wherein the third joint section is spaced apart from the fourth joint section in a first state, and wherein the third joint section is in sliding contact with the fourth joint section and maintains said sliding contact during relative movement between the first rigid pipe section and the second rigid pipe section so as to limit axial misalignment between the first and second longitudinal axes in a second state in which the first sliding support has failed.

2. The pipe assembly of claim 1, wherein the first sliding support is attached to outer surfaces of the first and second rigid pipe sections and the second sliding support is attached to inner surfaces of the first and second rigid pipe sections.

3. The pipe assembly of claim 1 or 2, wherein the first joint section overlaps the second joint section; and/or the third joint section overlaps the fourth joint section.

4. The pipe assembly of any preceding claim, wherein the first sliding support is spaced apart from the flexible pipe section in the radial direction; and/or the second sliding support is spaced apart from the flexible pipe section in the radial direction.

5. The pipe assembly of any preceding claim, wherein the flexible pipe section is configured to allow axial movement between the first and second rigid pipe sections.

6. The pipe assembly of any preceding claim, wherein the third and fourth joint sections are spaced apart by less than 2 millimetres in the first state; and/or wherein the axial misalignment between the first and second longitudinal axes in the second state is limited to less than 5 degrees.

7. The pipe assembly of any preceding claim, wherein at least one of the first and section joint sections comprises a spherical surface for sliding contact with a surface of the other of the first and second joint sections; and/or wherein at least one of the third and fourth joint sections comprises a spherical surface for sliding contact with a surface of the other of the third and fourth joint sections.

8. The pipe assembly of any preceding claim, wherein the flexible pipe section includes a bellows.

9. The pipe assembly of any preceding claim, wherein the first and second pipe sections form an outer pipe assembly, and the pipe assembly further comprises an inner pipe assembly enveloped by the outer pipe assembly.

10. The pipe assembly of claim 9, wherein the inner pipe assembly comprises a third rigid pipe section, a fourth rigid pipe section and a further flexible pipe section between the third and fourth rigid pipe sections, preferably wherein the further flexible pipe section includes a bellows.

11. The pipe assembly of any preceding claim, wherein the pipe assembly is configured to convey hydrogen fuel.

12. The pipe assembly of claim 11 when dependent on claim 9 or 10, wherein the inner pipe assembly is configured to convey hydrogen fuel.

13. The pipe assembly of claim 11 or 12, wherein the hydrogen fuel is liquid hydrogen fuel or gaseous hydrogen.

14. The pipe assembly of any preceding claim when dependent on claim 9, wherein the inner pipe assembly is spaced from the outer pipe assembly, preferably wherein the space between the inner pipe assembly and the outer pipe assembly comprises a vacuum or an inert gas.

15. An aircraft comprising the pipe assembly of any preceding claim.
